# EUROPÄISCHE PATENTANMELDUNG

(11) **EP 2 363 602 A2**
(43) Veröffentlichungstag der Anmeldung: **07.09.2011**
(21) Anmeldenummer: 11401037.4
(22) Anmeldetag: 04.03.2011
(51) Int. Cl.: F03D 1/06

(54) **Windflügel für eine Strömungsenergieanlage**

(30) Priorität: 05.03.2010 DE 202010000323 U
(71) Anmelder: Lätzsch GmbH Kunststoffverarbeitung, 04567 Kitscher (DE)
(72) Erfinder: Lätzsch, Hans-Joachim, 04655 Kohren-Sahlis (DE)
(74) Vertreter: Rumrich, Gabriele

(57) **Zusammenfassung**

Die Erfindung betrifft Windflügel für eine Strömungsenergieanlage, wobei der Windflügel (1) in wenigstens zwei Schalen unterteilt ist und zwischen den Schalen ein Mittelteil angeordnet sein kann und der Windflügel mindestens einen ersten Schubsteg aufweist, der sich stabilitätserhöhend innerhalb des Windflügels erstreckt, wobei die Schalen untereinander oder zumindest eine Schale mit dem Mittelteil in einem sich überlappenden Verbindungsbereich (V) verbunden sind und der erste Schubsteg in diesem Verbindungsbereich angeordnet ist.

## Beschreibung

Die Erfindung betrifft einen Windflügel für eine Strömungsenergieanlage nach dem Oberbegriff des ersten Schutzanspruchs. Derartige Windflügel werden bei Rotoren zur Bereitstellung von Energie aus regenerativen Energiequellen (z.B. Wind, Wasser) eingesetzt. Sie bestehen meist aus faserverstärkten Kunststoffen und sind aus schalenförmigen Teilen zusammengesetzt, wobei sie durch Ihre Formgebung die vorhandene kinetische Energie des Energieträgers (Mediums) nutzen, um einen Generator zu betreiben.

Aus der Druckschrift DE 201 15 330 U1 ist eine Windkraftturbine mit einem die Rotorblätter umgebenden Mantelgehäuse bekannt, dessen Querschnittsform aerodynamisch der Querschnittsform eines Tragflügels eines Flugzeuges ähnlich ist, wobei das Mantelgehäuse in einer Variante aus Kunststoff besteht und aus einer umlaufenden, separaten Innenwand und einer umlaufenden, separaten Außenwand gebildet wird, welche in ihrem in Achsrichtung der Rotorachse vorderen und hinteren Endbereichen miteinander, insbesondere durch eine Schweiß- oder Klebverbindung, verbunden sind, oder und einer anderen Variante aus einem oder mehreren, im Querschnitt aerodynamisch geformten und umlaufend in eine kreisrunde Form gebogenen Stranggusshohlprofil bzw. Stranggusshohlprofilen gebildet ist.
Der vordere Bereich und der mittlere Bereich sowie der mittlere Bereich und der hintere Bereich der Stranggussprofile überlappen sich dabei und werden in dem sich überlappenden Bereich miteinander verbunden, um eine absatzlose Außenkontur zu erzielen, weisen der vordere und der hintere Bereich einen nach innen gerichteten Absatz auf, über welchen der mittlere Bereich greift. Die Herstellung derartiger Hohlprofile ist relativ aufwendig.

Aus DE 10 2008 012 777 A1 ist ein Rotorflügel bekannt, der aus zwei Schalenabschnitten und einem Sicherungssteg gebildet wird. Die beiden Schalenabschnitte liegen auf Stoß aneinander an. Der Sicherungssteg liegt innen an beiden Schalenabschnitten an. Alle Teile sind miteinander verklebt. Durch die kleinen Anlagebereiche im Bereich der Klebeverbindung ist eine eingeschränkte Festigkeit im Verbindungsbereich gegeben. Mit der Lösung nach DE 78 33 148 U1 soll ein Windradflügel geschaffen werden, der sich durch eine relativ leichte und ausreichend steife Konstruktion auszeichnet, die fertigungstechnisch einfach und außerdem billig herstellbar ist und keine Nacharbeitung zur Erlangung etwa genau angepasster Formen erfordert. Die Profilverschalung besteht dazu aus vorgefertigtem Nasenteil, Endteil und eventuellen Teilen des Mittelbereiches, die an einem Holm (Schubsteg) befestigt sind, sowie aus einem nach dem Zusammenbau dieser vorgefertigten Teile zwischen dem Nasenteil und dem Profilende direkt auf dem Holm aufgeformten Mittelteil. Die Befestigung des Nasenteils und des Endteils am Holm bzw. am Mittelteil erfolgt über Winkelelemente, die mit Langlöchern versehen sind und angeklebt bzw. angeschraubt sind. Nachteilig ist die Verwendung vieler Einzelteile in Form des Holms, der aus mehreren Platten zusammengeschweißt ist, des Mittelteils und der Winkelelemente.

Aus der Druckschrift DE 31 130 79 C2 ist ein aerodynamischer Groß-Flügel, insbesondere ein Rotorblatt für große Windenergie-Anlagen, mit mindestens drei den Flügel-Querschnitt bildenden, gesondert hergestellten und anschließend zusammengefügten Modulen in Form von Holm, Nasenschale, Profilfahne bekannt, wobei der der Holm zwei dem Flügelprofil-Mlttelteil entsprechende Schalen besitzt und diese Schalen durch eine Schaum-Steg-Einheit abgestützt sind. Der in der Mitte angeordnete Holm weist eine Außenkontur auf. die dem Flügelprofil entspricht. Die Profilfahnen-Hälften und die Nasenschale werden mit dem Holm durch Verklebungen und Verschraubungen in jeweils einem Überlappungsbereich verbunden. Zusätzliche Rippen helfen dabei beim Positionieren und werden als Versteifung mit den Profilfahnen-Hälften und dem Holm verklebt. Die Verschraubungen sollen der Verklebung den nötigen Anpressdruck geben und so eine Schälung verhindern. Der Holm wird aus zwei Teilen zusammengesetzt, die durch Verbindungselemente unter Vorspannung miteinander verbunden sind. Nachteilig ist der Aufwendige Aufbau es Holms und dass die Profilfahnenelemente elastisch ausgebildet sind, wodurch eine eingeschränkte Steifigkeit im Verbindungsbereich gegeben ist und durch Schrauben und Kleben befestigt werden müssen.

Ein Rotorblatt für eine Windenergieanlage, dessen Hohlräume mit Luft befüllt sind, wird in der Druckschrift DE 10 2005 054 594 A1 beschrieben. Dadurch sollen Wechsellasten gegenüber verringert oder verhindert werden. Dazu kann im jeweiligen Hohlraum grundsätzlich entweder Unterdruck herrschen oder Überdruck. Bei einem Unterdruck ergeben sich aufgrund des außen herrschenden, größeren Luftdruckes Kräfte in Richtung des Inneren des Rotorblattes, wodurch eine Vorspannung des Rotorblattes erzeugt wird. Die dadurch wirkenden Kräfte führen insbesondere auch zu definierten Druckbelastungen von im Inneren angeordneten, die Unterschale und die Oberschale verbindenden Stegen. Die definierte Druckbelastung ist durch die Einstellung des Unterdruckes so gewählt, dass die Druckkräfte auf die Stege größer sind als im Betrieb der Windenergieanlage auftretende, durch äußere Einflüsse auf die Stege einwirkende Zugkräfte. Dadurch sollen die im Betrieb auftretenden Zugkräfte aufgehoben bzw. sogar überkompensiert werden. Herrscht im Rotorblatt im Vergleich zu dem mittleren Luftdruck am Einsatzort der Windenergieanlage Überdruck sollen damit Druckbelastungen der Stege des Rotorblattes vermieden werden vermieden. Durch den Überdruck und der damit einhergehenden Vorspannung des Rotorblattes wirken auf die Stege definierte Zugkräfte, die die im Betrieb auftretenden äußeren Druckkräfte kompensieren sollen, sodass das Rotorblatt insgesamt nur Zugbelastungen erfährt. Der Unter- oder Überdruck werden durch eine Pumpe erzeugt, die einen zusätzlichen technischen Aufwand darstellt

Aufgabe der Erfindung ist es, einen Windflügel für eine Strömungsenergieanlage zu schaffen, der einen einfachen und stabilen Aufbau aufweist und montagefreundlich sowie kostengünstig ohne bzw. ohne wesentliche Nacharbeit herstellbar ist.

Diese Aufgabe wird mit den Merkmalen des ersten Patentanspruchs gelöst. Vorteilhafte Ausgestaltungen ergeben sich aus den Unteransprüchen.

Der Windflügel wird insbesondere für eine Strömungsenergieanlage eingesetzt, wobei er im Wesentlichen quer zu seiner Längserstreckung in wenigstens zwei Schalen unterteilt ist, wobei zwischen den Schalen ein Mittelteil angeordnet sein kann und der Windflügel mindestens einen ersten Schubsteg aufweist, der sich stabilitätserhöhend innerhalb des Windflügels erstreckt, wobei die Schalen untereinander oder mit dem Mittelteil in einem Verbindungsbereich (V) überlappend verbunden sind und der erste Schubsteg in diesem Verbindungsbereich angeordnet ist.

Dadurch, dass der Schubsteg im Verbindungsbereich angeordnet ist, wird eine einfache und montagefreundliche Herstellung gewährleistet und die Stabilität des Windflügels entscheidend erhöht. Durch die Überlappung der Schalen untereinander bzw. die Überlappung der Schalen mit dem Mittelteil im Verbindungsbereich wird ebenfalls die Stabilität erhöht und dabei die Nacharbeit reduziert.

Wenn der Schubsteg unter nach außen wirkender Vorspannung in dem/den Verbindungsbereich/en des Windflügels angeordnet ist, trägt dies ebenfalls zur Verbesserung der Steifigkeit des Windflügels bei.

Der Verbindungsbereich kann sich z.B. im Wesentlichen an der dicksten Stelle des Querschnitts des Windflügels befinden, was insbesondere der Fall ist, wenn zwei Schalen direkt miteinander verbunden werden.

Alternativ ist es auch möglich, dass der Windflügel in ein Nasenteil, ein Mittelteil und ein Endteil unterteilt ist, wobei dann das Nasenteil die erste Schale und das Endteil die zweite Schale bildet. Jeweils zwischen erster Schale und Mittelteil sowie zwischen Mittelteil und zweiter Schale ist ein Verbindungsbereich vorgesehen, wobei bevorzugt in beiden Verbindungsbereichen ein erster Schubsteg angeordnet ist.
Eine Schale weist dabei in Richtung zur anderen Schale oder zum Mittelteil einen nach innen abgewinkelten Absatz auf, über welchen die andere Schale oder das Mittelteil überlappend greift.

Bei Verwendung eines Mittelteiles kann dieses auch zur ersten und oder zweiten Schale den nach innen gerichteten Absatz aufweisen, über welchen dann die erste bzw. zweite Schale greift.
Der erste Schubsteg weist bevorzugt einen abgewinkelten ersten Randbereich auf, der mit der Innenseite des Absatzes verbunden ist oder der zwischen dem Absatz den überlappenden Bereich der jeweiligen Schale bzw. des Mittelteiles greift und mit diesem verbunden ist.
Es ist auch möglich, dass der Schubsteg keinen Randbereich aufweist und direkt mit dem Außenumfang im Verbindungsbereich befestigt wird.

An den ersten Schubsteg kann sich ein zweiter Schubsteg anschließen, der jeweils am ersten Schubsteg im Wesentlichen flächig anliegt und mit diesem verbunden ist und der je nach Anordnung an der Innenseite des Nasenteils, des Endteils oder des Mittelteils befestigt ist. Bevorzugt weist auch der zweite Schubsteg einen abgewinkelten zweiten Randbereich auf, der mit der Innenkontur einer Schale oder des Mittelbereiches verbunden ist. Der zweite Randbereich weist dabei vom ersten Randbereich des ersten Schubsteges weg.

Bei Verwendung einer ersten und einer zweiten Schale, wobei eine erste Schale ein Nasenteil und eine zweite Schale ein im Wesentlichen spitz zulaufendes Endteil des Windflügels bildet, weist bevorzugt das Endteil (zweite Schale) den im Verbindungsbereich nach innen abgewinkelten Absatz auf, über welchen das offene Ende des Nasenteils (erste Schale) greift, so dass eine im Wesentlichen absatzlose Außenkontur des Windflügels gebildet wird.

Wird zwischen Nasenteil (erster Schale) und Endteil (zweiter Schale) ein Mittelteil angeordnet, weisen bevorzugt das Nasenteil und das Endteil einen nach innen abgewinkelten Absatz auf und das Mittelteil greift über die Absätze von Nasenteil und Endteil, so dass auch bei dieser Variante eine im Wesentlichen absatzlose Außenkontur des Windflügels gebildet wird.

Es ist jedoch auch möglich, dass das Mittelteil in Richtung zum Nasenteil (erste Schale) und in Richtung zum Endteil (zweite Schale) einen nach innen abgewinkelten Absatz aufweist, über welchen jeweils die erste und die zweite Schale greifen.

Bevorzugt wird der erste Schubsteg mit seinem ersten Randbereich an der Innenkontur des Absatzes befestigt, wobei der erste Randbereich vom Nasenteil weg gerichtet ist oder in Richtung zum Nasenteil weist.

Es ist möglich, dass zusätzlich ein oder mehrere weitere dritte Schubstege im Windflügel angeordnet werden.

Die Schalen untereinander bzw. mit dem Mittelteil und die Verbindungen der Schubstege werden bevorzugt durch Klebeverbindungen realisiert, die insbesondere dauerelastisch sind.

Vorteilhafter Weise findet dabei ein Polyurethan-Klebstoff Anwendung.

Die Schalen und/oder Mittelteile und/oder die Schubstege werden vorzugsweise aus faserverstärktem duroplastischem Matrixmaterial gefertigt. Die Schalen bzw. Mittelteile werden dabei an ihrer Außenkontur zumindest teilweise mit Gelcoat versehen, der das Rotorblatt vor Umwelteinflüssen besonders effektiv schützt.

Die Erfindung wird nachfolgend an Ausführungsbeispielen und zugehörigen Zeichnungen näher erläutert. Es zeigen:
- Figur 1: die Darstellung eines Querschnittes durch einen Windflügel, der aus einer ersten und einer zweiten Schale besteht, die miteinander verbunden sind, wobei sich innerhalb des Windflügels drei Schubstege erstrecken,
- Figur 2: Einzelheit X gemäß Figur 1,
- Figur 3: die Darstellung eines Windflügels, wobei sich zwischen einer ersten und einer zweiten Schale ein Mittelteil aus zwei Platten erstreckt und ebenfalls mehre Schubstege vorgesehen sind,
- Figur 4 und 5: Varianten der Gestaltung der ersten Schubstege, die eine nach außen wirkende Vorspannung auf den Fügebereich übertragen.

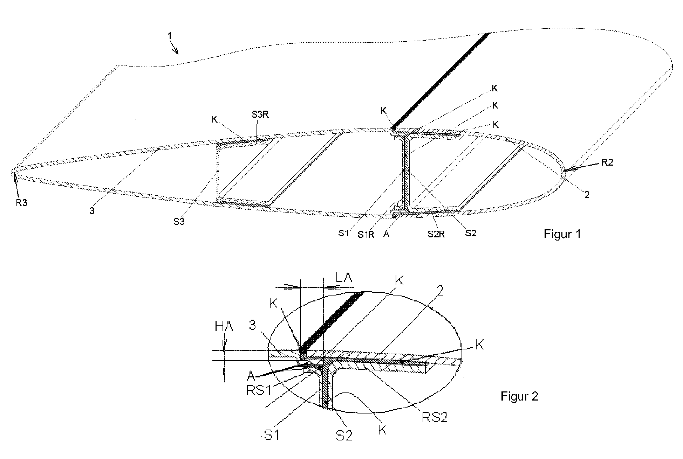

Figur 1 zeigt einen Schnitt eines Windflügel 1 quer zu seiner Längserstreckung, wobei der Windflügel 1 für eine Strömungsenergieanlage (insbesondere Windkraftanlage) eingesetzt wird und im Wesentlichen entlang seiner Längserstreckung in eine erste Schale S1 und eine zweite Schale S2 unterteilt ist. In Figur 2 wird die Einzelheit X gemäß Figur 1 dargestellt, in welcher der Querschnitt des Verbindungsbereiches V nochmals vergrößert dargestellt ist.
Die erste Schale S1 bildet den mit einem großen ersten Krümmungsradius R1 versehenen Nasenteil und die zweite Schale S2 den Endteil, der dem Nasenteil gegenüberliegend einen zweiten geringen Krümmungsradius R2 aufweist. Die beiden Schalenteile S1, S2 sind in einem Verbindungsbereich V miteinander so verbunden, dass sich eine im Wesentlichen absatzlose Außenkontur des Windflügels 1 ergibt, wobei sich der Verbindungsbereich V hier im Wesentlichen an der dicksten Stelle des Querschnitts des Windflügels 1 befindet.
Im Verbindungsbereich V weist die zweite Schale 3 in Richtung zur ersten Schale 2 einen nach innen abgesetzten Absatz A auf, über welchen die erste Schale 2 überlappend greift. Der Absatz A besitzt (s. Figur 2) eine Länge LA, die eine relativ große Überlappung und damit eine sichere Verbindung mit der ersten Schale 2 gewährleistet. Die Höhe HA des Absatzes H entspricht im Wesentlichen der Materialdicke der ersten Schale 2 plus der Dicke der Klebstoffschicht K zwischen dem außen liegenden Bereich des Absatzes A und der ersten Schale 2.
Im Überlappungsbereich zwischen dem Absatz A der zweiten Schale 3 und dem darüber greifenden Bereich der ersten Schale 2 liegt innen am Absatz A ein erster Schubsteg S1 mit seinem abgewinkelten ersten Randbereich S1 R unter Vorspannung an. Der abgewinkelte erste Randbereich S1 R weist in Richtung zum Radius R1 und drückt unter Vorspannung gegen die Innenseite des Absatzes 3.1, die dadurch wiederum nach außen gegen die Innenseite der ersten Schale 2 gedrückt/verspannt wird, wodurch eine hohe Stabilität des Windflügels 1 gewährleistet ist. Der erste Randbereich S1 R wurde mit der Innenseite des Absatzes A ebenfalls mittels einer Klebeverbindung K verklebt.

Zur weiteren Erhöhung der Stabilität ist ein zweiter Schubsteg S2 vorgesehen, der im Wesentlichen flächig am ersten Schubsteg S1 ebenfalls mittels einer Klebeverbindung K verklebt ist und einen zweiten Randbereich S2R aufweist, der von ersten Randbereich S1 R abgewandt und mit der Innenseite der ersten Schale 2 mittels einer Klebeverbindung K verklebt ist.

Im Verbindungsbereich V überlappen sich von außen nach innen die erste Schale 2, der Absatz A der zweiten Schale 3 und der erste Randbereich S1 R des ersten Schubsteges S1, wodurch eine dreifache Materialdicke und dadurch eine hohe Stabilität zu verzeichnen ist.

Zusätzlich ist in die zweite Schale 3 ein dritter Schubsteg S3 mit seinem abgewinkelten dritten Rand S3R mittels einer Klebeverbindung K eingeklebt.

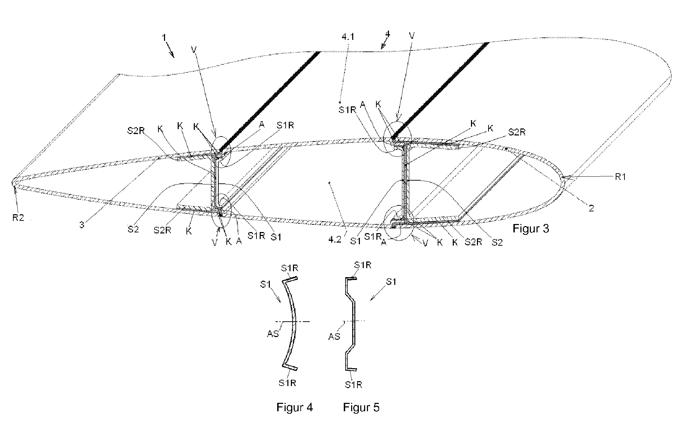

Figur 3 zeigt die Darstellung eines Windflügels 1, wobei sich zwischen einer ersten und einer zweiten Schale 2, 3 ein Mittelteil 4 aus zwei Platten 4.1 und 4.2 erstreckt. Die Platten 4.1 und 4.2 weisen an den in Richtung zu der ersten und zweiten Schale 2, 3 nach innen gerichtete Absätze A auf, die im Wesentlichen zum einen in Richtung zum Radius R1 der ersten Schale 2 und zum anderen in Richtung zum Radius R2 der zweiten Schale 3 weisen. Über die Absätze A greifen überlappend jeweils die Enden der ersten Schale 2 und der zweiten Schale 3. In den Verbindungsbereichen V ist an den Innenseiten der Ansätze A jeweils ein erster Schubsteg S1 mit seinem ersten Rand S1 R verklebt, wobei jeder der beiden ersten Schubstege S1 eine nach außen wirkende Vorspannung auf den Absatz A und damit auf den überlappenden Bereich der entsprechenden ersten bzw. zweiten Schale 2, 3 überträgt. Die ersten Randbereiche S1 R der beiden ersten Schubstege S1 weisen aufeinander zu. An dem in Richtung zur ersten Schale 2 liegenden ersten Schubsteg S1 liegt ein zweiter Schubsteg S2 im Wesentlichen flächig an und ist mit diesem über eine Klebeverbindung K verbunden. Der zweite Randbereich S2R weist im Wesentlichen in Richtung zum ersten Radius R1 und ist mit der Innenseite der ersten Schale 2 verklebt.

An dem in Richtung zur zweiten Schale 3 angeordneten ersten Schubsteg S1 liegt ebenfalls ein zweiter Schubsteg S2 im Wesentlichen flächig an und ist ebenfalls mit den ersten Schubsteg S1 über eine Klebeverbindung K verbunden. Der zweite Randbereich S2R dieses weiteren zweiten Schubsteges S2 weist im Wesentlichen in Richtung zum zweiten Radius R2 der zweiten Schale 3 und ist mit deren Innenseite verklebt.

Alle Klebeverbindungen K sind durch fett gezeichnete graue Linien dargestellt und werden vorzugsweise als dauerelastische Klebeverbindungen mit Polyurethan-Klebstoff ausgeführt. Die Schalen 2, 3 und auch das Mittelteil 4 (Platten 4.1, 4.2) sowie die Schubstege S1, S2, S3 werden bevorzugt aus faserverstärktem duroplastischem Matrixmaterial gefertigt. Die Schalen und das Mittelteil wurden an ihren Außenkonturen mit Gelcoat beschichtet.
Im Verbindungsbereich V ist der verwendete Klebstoff nach außen durch eine schwarze Linie sichtbar, die gemäß Figur 1 und 2 zwischen der ersten und zweiten Schale 2, 3 in der vorhandenen Fuge verläuft.

In der Ausführung gemäß Figur 3 verläuft diese schwarze, nach außen sichtbare Klebstofflinie jeweils in Längsrichtung des Windflügels in der Fuge zwischen erster Schale 2 und Mittelteil 4 sowie zwischen zweiter Schale 3 und Mittelteil 4.

Die Fuge entsteht durch einen geringen Abstand zwischen dem in den Darstellungen senkrechten Bereich der Absätze A und der Stirnseite der angrenzenden ersten Schale 2 bzw. zweiten Schale 3.

In Figur 4 und 5 sind einige mögliche Ausführungsformen von ersten Schubstegen S1 dargestellt, die beim Einbau in den Windflügel eine Vorspannkraft aufbringen.

Während in den Darstellungen gemäß Figur 1 und 2 die ersten Schubstege S1zwischen dem leicht nach außen abgewinkelten ersten Randbereich S1 R eine im Wesentlichen plane Fläche aufweisen besitzt der erste Schubsteg S1 gemäß Figur 4 zwischen seinem ersten Randbereich S1 R eine in Richtung zu dem freien Ende des ersten Randbereiches SR1 konvex gekrümmte Fläche.
In Figur 5 ist die sich zwischen dem Randbereich erstreckende Fläche zuerst plan ausgeführt und dann in Richtung zum Freien Ende des ersten Randbereiches abgewinkelt und dann wieder plan gestaltet.

Sowohl in Figur 4 als auch in Figur 5 sind die ersten Randbereiche S1 R zu einer Längsachse AS der Schubstege S1 nach außen abgewinkelt. Ist die Innenabmessung des Absatzes A (Fig. 1 bis 3) kleiner als die Außenabmessung des ersten Randbereiches S1 R so wird dieser bei der Montage unter Vorspannung in den ersten Absatz eingeschoben, wobei die Gestaltung der sich zwischen dem Randbereich erstreckenden Fläche eine entsprechende Federwirkung begünstigt. Die Enden der Schalen oder der Platten des Mittelteils, die den Absatz A aufweisen, werden dadurch gleichzeitig auseinander und gegen das über den Absatz A greifende Bauteil gedrückt. Die Klebeverbindung zwischen dem Absatz A und dem darübergreifenden Bauteil wird dadurch ebenfalls begünstigt.
Neben den in den Figuren 1, 3, 4 und 5 dargestellten ersten Schubstegen sind auch andere Gestaltungsvarianten (z.B. Z-förmige Ausführungen) möglich, die eine entsprechende Vorspannung gewährleisten.
Die Zugstreben können auch gemäß nicht dargestellter Ausführungsvarianten zur Gewichtsersparnis Durchdringungen oder Ausschnitte aufweisen, die insbesondere mittig eingebracht sein sollten.

## Patentansprüche

1. Windflügel für eine Strömungsenergieanlage, wobei der Windflügel (1) in wenigstens zwei Schalen unterteilt ist und zwischen den Schalen ein Mittelteil angeordnet sein kann und der Windflügel mindestens einen ersten Schubsteg aufweist, der sich stabilitätserhöhend innerhalb des Windflügels erstreckt, wobei die Schalen untereinander oder zumindest eine Schale mit dem Mittelteil in einem sich überlappenden Verbindungsbereich (V) verbunden sind und der erste Schubsteg in diesem Verbindungsbereich angeordnet ist.

2. Windflügel nach Anspruch 1, **dadurch gekennzeichnet, dass** der erste Schubsteg unter nach außen wirkender Vorspannung im Verbindungsbereich der Schalen des Windflügels angeordnet ist.

3. Windflügel nach Anspruch 1 oder 2, **dadurch gekennzeichnet, dass** sich der Verbindungsbereich (V) im Wesentlichen an der dicksten Stelle des Querschnitts des Windflügels (1) befindet.

4. Windflügel nach Anspruch einem der Ansprüche 1 bis 3, **dadurch gekennzeichnet, dass** die erste oder zweite Schale im Verbindungsbereich einen nach innen abgewinkelten Absatz aufweist und dass die jeweils andere Schale über den Absatz greift, so dass eine im Wesentlichen absatzlose Außenkontur des Windflügels gebildet wird.

5. Windflügel nach einem der Ansprüche 1 bis 3, **dadurch gekennzeichnet, dass** der Windflügel in ein Nasenteil, welches die erste Schale bildet, ein Mittelteil und ein Endteil, welches die zweite Schale bildet, unterteilt ist und dass zwischen erster Schale und Mittelteil ein Verbindungsbereich mit einem ersten Substeg und zwischen Mittelteil und zweiter Schale ein Verbindungsbereich mit einem weiteren ersten Schubsteg angeordnet ist.

6. Windflügel nach Anspruch 5, **dadurch gekennzeichnet, dass** das Nasenteil und das Endteil einen nach innen abgewinkelten Absatz aufweisen und dass das Mittelteil über die Absätze von Nasenteil und Endteil greift, so dass eine im Wesentlichen absatzlose Außenkontur des Windflügels (1) gebildet wird.

7. Windflügel nach Anspruch 5, **dadurch gekennzeichnet, dass** das Mittelteil in Richtung zum Nasenteil und zum Endteil jeweils einen nach innen abgewinkelten Absatz aufweisen und dass Nasenteil und Endteil über jeweils einen Absatz greifen, so dass eine im Wesentlichen absatzlose Außenkontur des Windflügels (1) gebildet wird.

8. Windflügel nach einem der Ansprüche 1 bis 7, **dadurch gekennzeichnet, dass** der erste Schubsteg einen abgewinkelten ersten Randbereich aufweist, der mit der Innenseite des Absatzes verbunden ist oder der zwischen dem Absatz der ersten Schale und den überlappenden Bereich der zweiten Schale oder zwischen dem Absatz zwischen erster/zweiter Schale und Mittelteil greift und mit diesen verbunden ist.

9. Windflügel nach einem der Ansprüche 1 bis 8, **dadurch gekennzeichnet, dass** sich an den ersten Schubsteg ein zweiter Schubsteg anschließt.

10. Windflügel nach Anspruch 9, **dadurch gekennzeichnet, dass** der zweite Schubsteg an dem ersten Schubsteg im Wesentlichen flächig anliegt und mit diesem verbunden ist und dass der zweite Schubsteg einen abgewinkelten zweiten Randbereich aufweist, der mit der Innenkontur einer Schale oder des Mittelteils verbunden ist.

11. Windflügel nach Anspruch 9 oder 10, **dadurch gekennzeichnet, dass** der zweite Randbereich des zweiten Schubsteges vom ersten Randbereich des ersten Schubsteges weg weist.

12. Windflügel nach einem der Ansprüche 1 bis 11, **dadurch gekennzeichnet, dass** in dem Windflügel wenigstens ein dritter Schubsteg befestigt ist.

13. Windflügel nach einem der Ansprüche 1 bis 12, **dadurch gekennzeichnet, dass** alle Verbindungen Klebeverbindungen sind.

14. Windflügel nach einem der Ansprüche 1 bis 13, **dadurch gekennzeichnet, dass** die Klebeverbindungen dauerelastisch sind.

15. Windflügel nach einem der Ansprüche 1 bis 14, **dadurch gekennzeichnet, dass** ein Polyurethan-Klebstoff Anwendung findet.

16. Windflügel nach einem der Ansprüche 1 bis 15, **dadurch gekennzeichnet, dass** die Schalen und/oder das Mittelteil und/oder die Schubstege aus faserverstärktem duroplastischem Matrixmaterial gefertigt und die Schalen und/oder das Mittelteil an ihrer Außenkontur zumindest teilweise mit Gelcoat versehen sind.

17. Windflügel nach einem der Ansprüche 1 bis 16, **dadurch gekennzeichnet, dass** das Mittelteil aus wenigstens zwei Platten gebildet wird.
